Europäisches Patentamt

European Patent Office

Office européen des brevets

(11) Veröffentlichungsnummer: **0 214 446**
**B1**

# EUROPÄISCHE PATENTSCHRIFT

(45) Veröffentlichungstag der Patentschrift:
20.12.89

(51) Int. Cl.⁴: **B 65 G 37/02**

(21) Anmeldenummer: 86110550.0

(22) Anmeldetag: 30.07.86

(54) Verfahren und Vorrichtung zur Verkürzung der Durchlaufzeiten in Fertigungsbetrieben.

(30) Priorität: 04.09.85 DE 3531550

(43) Veröffentlichungstag der Anmeldung:
18.03.87 Patentblatt 87/12

(45) Bekanntmachung des Hinweises auf die Patenterteilung:
20.12.89 Patentblatt 89/51

(84) Benannte Vertragsstaaten:
AT BE CH FR GB IT LI NL SE

(56) Entgegenhaltungen:
EP-A- 0 093 863
CH-A- 546 191
DE-A- 1 781 310
DE-B- 1 951 598
DE-C- 2 947 745
US-A- 4 084 684

SIEMENS-ZEITSCHRIFT 1971, HEFT 7, SEITEN 460-468

(73) Patentinhaber: DÜRKOPPWERKE GMBH,
Nikolaus-Dürkopp-Strasse 10, D-4800 Bielefeld 1 (DE)

(72) Erfinder: Grube, Erwin, Linnenstrasse 120,
D-4800 Bielefeld 18 (DE)
Erfinder: Schilling, Gerhard, Furtwänglerstrasse 33,
D-4800 Bielefeld 1 (DE)

ACTORUM AG

## Beschreibung

Verfahren und Vorrichtung zur Verkürzung der Durchlaufzeiten in Fertigungsbetrieben.

Die Erfindung betrifft ein Verfahren nach dem Oberbegriff des Anspruchs 1 und eine Vorrichtung zur Durchführung des Verfahrens nach Anspruch 3.

Es ist aus der DE-OS 17 81 310 eine als Schleppkreisförderer aufgebaute Transportvorrichtung bekannt, bei der die Merkmale des Oberbegriffs der Ansprüche 1 und 3 erfüllt sind. Entsprechend ihrer Codierung werden aus einer Vielzahl von auf einer Hauptbahn verfahrbaren Lastträgern mehrere identifizierte Lastträger auf eine von der Hauptbahn abzweigende Hilfsbahn geleitet. Jeder der zuletzt genannten Lastträger gelangt somit in die Nähe einer Arbeitsstation und wird nach vorgenommener Bearbeitung des an dem Lastträger angehängten Werkstückes wieder in die Hauptbahn eingeschleust. Bei der bekannten Transportvorrichtung ist es nicht möglich, einen auf der Hilfsbahn befindlichen Lastträger derart davon abzunehmen und diesen somit zeitweise aus dem Förderkreis herauszunehmen, daß er von ihm nachfolgenden, ebenfalls auf dieser Hilfsbahn befindlichen Lastträgern überholt werden kann.

Bei einer aus der «SIEMENS-Zeitschrift» 1971, Heft 7 Seite 460 bis 468 bekannten Power-and-Free-Förderanlage, die mehrere selbständig arbeitende Förderkreise aufweist, wird ein weitgehend automatischer Materialfluß durch eine zentrale elektronische Datenverarbeitungseinrichtung ermöglicht, die die gesamte Förderanlage steuert. Aus dieser Veröffentlichung ist aus Seite 4, zweiter Absatz, ein sogenannter Abgabeaufzug entnehmbar. Der Freebahnabschnitt wird mit einem Gehänge aus dem Förderstrang gelöst, abgesenkt und nach dem Arbeitsvorgang wieder hochbefördert. Die bekannte Power-and-Free-Förderanlage ermöglicht jedoch nicht, daß ein abgesenktes Gehänge von nachfolgenden, in demselben Förderstrang befindlichen, Gehängen überholt werden kann.

Ferner ist aus der DE-PS 29 47 745 eine Steueranlage für die Montage von Kraftfahrzeugbauteilen bekannt, deren erforderliche Datenverarbeitungseinrichtung stark vereinfacht ist, um mittels dezentralisierter Rechnereinheiten trotzdem jedes einzelne Montageband nach Maßgabe der jeweiligen Erfordernisse zuverlässig zu steuern. Zu diesem Zweck wird jedes Kraftfahrzeugteil zu seiner Identifizierung mit einer individuellen Codierung versehen, die von einer Leseeinrichtung gelesen wird. Am Eingang jedes Montagebandes und an jeder Montagebandauswahlstelle ist eine solche Leseeinrichtung vorgesehen. Die bekannte Steueranlage ermöglicht nicht, daß ein Kraftfahrzeugbauteil derart von einem Montageband abgenommen wird, daß es von ihm nachfolgenden, ebenfalls auf diesem Montageband befindlichen, Kraftfahrzeugbauteilen überholt werden kann.

Schließlich ist aus der US-PS 4 084 684 ein Verfahren bekannt, nach dem ein von einem ersten Schleppkreis-Förderer transportiertes Werkstück mittels einer Übertragungsvorrichtung von diesem abgenommen und nahe an einen zweiten Schleppkreis-Förderer herantransportiert und auf diesen überführt wird, wenn zuvor die Aufnahmebereitschaft des zweiten Schleppkreis-Förderers festgestellt wurde. Mit der zwischen beiden Förderern vorgesehenen Übertragungsvorrichtung ist eine Rückübertragung des Werkstückes vom zweiten auf den ersten Förderer nicht beabsichtigt. Das bekannte Verfahren ermöglicht nicht, daß das vom ersten Förderer abgenommene Werkstück bei weitergeführtem Sortierbetrieb in eine, bezogen auf ein Bearbeitungszentrum einer Arbeitsstation, griffoptimierte Lage verbracht und nach erfolgter Bearbeitung des Werkstückes auf den Förderer rückübertragen wird, von dem es zuvor abgenommen wurde.

Der Erfindung liegt somit die Aufgabe zugrunde, ein Verfahren zu entwickeln, durch das eine bedarfsgerechte, automatische Vorsortierung der zu bearbeitenden Werkstücke in unmittelbarer Nähe der betreffenden Arbeitsstation ermöglicht wird, sowie eine Vorrichtung zur Durchführung des Verfahrens zu schaffen.

Diese Aufgabe wird bei einem Verfahren nach dem Oberbegriff des Anspruches 1 durch dessen kennzeichnende Merkmale gelöst. Die Gegenstände nach den Ansprüchen 3 bis 6 betreffen die Vorrichtung zur Durchführung des Verfahrens nach den Ansprüchen 1 und 2.

Mit dem Verfahren und der Vorrichtung zur Durchführung des Verfahrens nach der Erfindung wird eine Verkürzung der Durchlaufzeiten durch optimierten, unproduktive Nebenzeiten weitgehend vermeidenden Materialfluß zu den einzelnen Arbeitsstationen ermöglicht, wobei die zu bearbeitenden Werkstücke bezogen auf das Bearbeitungszentrum jeder Arbeitsstation der Bedienungsperson in griffoptimierter, ergonomisch günstiger Position angeboten werden. Das erfindungsgemäße Verfahren ermöglicht ferner vorgezogene Bearbeitung von Eilaufträgen durch im zentralen Verwaltungsrechner gespeicherte Prioritätskriterien, wodurch insbesondere in der Bekleidungsindustrie ein beachtlicher Rationalisierungseffekt erzielt wird.

Ein besonders auf die Fertigung in der Bekleidungsindustrie abgestelltes Ausführungsbeispiel wird anhand der Fig. 1 bis 7 erläutert. Es zeigt:

Fig. 1 eine Perspektivdarstellung der kompletten Vorrichtung und der Arbeitsstation,

Fig. 2 eine Draufsicht auf die komplette Vorrichtung und die Arbeitsstation,

Fig. 3 eine Schnittdarstellung der Schwenkvorrichtung,

Fig. 4 eine Detaildarstellung des geöffneten Maules der Schwenkvorrichtung,

Fig. 5 eine Detaildarstellung des geschlossenen Maules der Schwenkvorrichtung,

Fig. 6 eine Seitenansicht des Lastträgers,

Fig. 7 eine Draufsicht auf die komplette Vorrichtung, bei der ein Lastträger in eine von der Hilfsbahn abzweigende Stichbahn eingeschleust wurde.

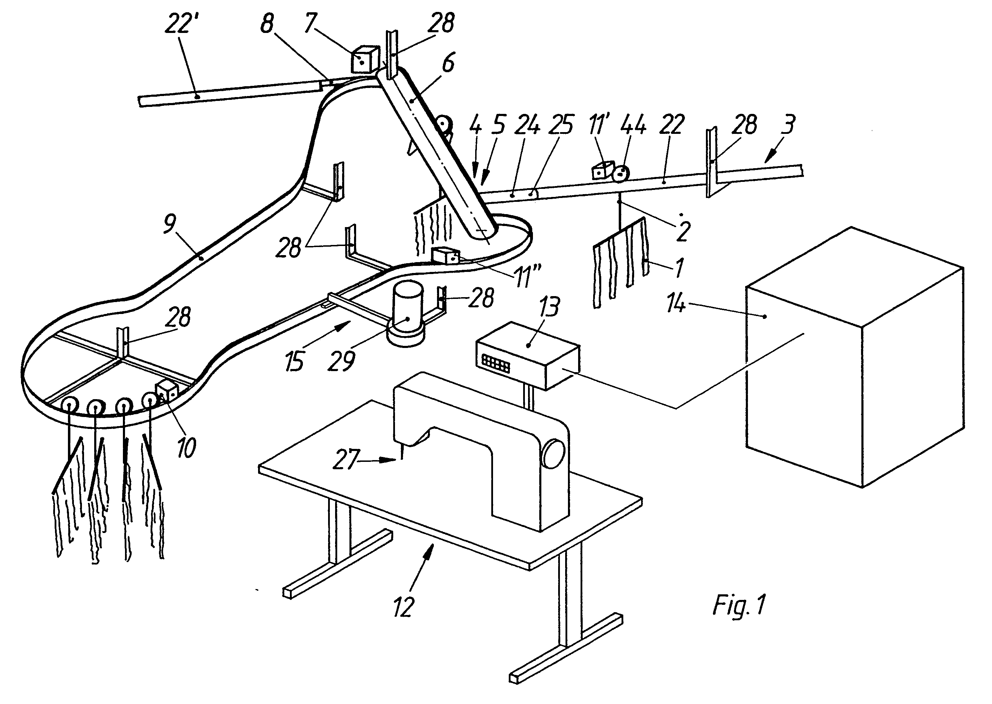

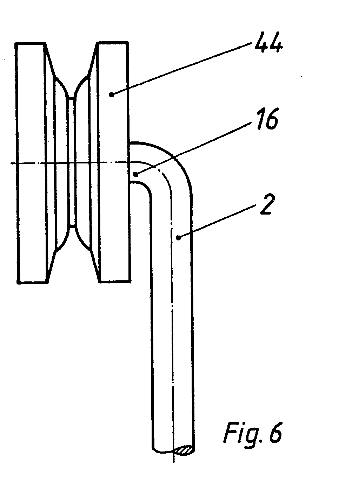

Aus Fig. 1 ist die komplette Vorrichtung ersichtlich, die im wesentlichen aus einer Hauptbahn 4, wenigstens einer von letzterer abzweigenden Hilfsbahn 9 und einer Schwenkvorrichtung 15 besteht. Wesentliche Bestandteile der Hauptbahn 4 sind wenigstens eine geneigte Tragschiene 22, die eine höher gelegene Aufgabestelle 3 und einen tiefer gelegenen Endpunkt 5 aufweist, und eine an diesem ansetzende, aufwärtsgerichtete, gesteuerte Schleppkette 6. Sie wird von einem gesteuerten Elektromotor angetrieben, wodurch ein zum lösbaren Greifen der Werkstücke 1 mit Greifelementen versehener Lastträger 2 wieder auf das höhere Niveau geschleppt wird. Die Schleppkette 6 wie der in Fig. 6 schematisch dargestellte Lastträger 2 sind hinlänglich bekannt, so daß sie hier nicht näher beschrieben werden müssen. In Nähe ihres Endpunktes 5 weist die Tragschiene 22 eine um einen Schwenkpunkt 25 nach oben verschwenkbare Brücke 24 auf. Sie liegt im unbelasteten Zustand derart auf, daß die Oberkanten der Tragschiene 22 und der Brücke 24 eine Fluchtlinie bilden. Ausgehend von der Aufgabestelle 3 ist vor dem Schwenkpunkt 25 eine erste Halte- und Vereinzelungsvorrichtung 11' vorgesehen, die das Aufstauen ankommender Lastträger 2 ermöglicht und die zum richtigen Zeitpunkt den jeweils zuerst aufgestauten Lastträger 2 freigibt. Besagte Vorrichtung 11' ist in der Fördertechnik bekannt und braucht deshalb hier nicht näher beschrieben zu werden.

Die Tragschienen 22,22', die Schleppketten 6, die Hilfsbahnen 9 sowie die Schwenkvorrichtungen 15, die Pufferstationen 10 und die Halte- und Vereinzelungsvorrichtungen 11', 11'' sind an einem stationären Fördergestellt 28 befestigt, das in Fig. 1 nur andeutungsweise dargestellt ist. Es ist entweder als Hängegestell oder als Standgestellt ausführbar.

Unmittelbar hinter dem oberen Ende der Schleppkette 6 befindet sich am Anfang der nächstfolgenden Tragschiene 22' eine Lesevorrichtung 7 zur Erkennung des durch die Codierung in der Laufrolle 44 jedes Lastträgers 2 gebildeten Bit-Musters. Die Ausführung der Codierung wie auch die Lesevorrichtung 7 sind bekannt, so daß sich ihre ausführliche Beschreibung an dieser Stelle erübrigt. Am Anfang der nächstfolgenden Tragschiene 22' befindet sich gemäß Fig. 1 eine in der Horizontalebene umlegbare Weiche 8. Mit ihr benachbart ist der Anfangspunkt der Hilfsbahn 9. Nach entsprechender Umlegung der Weiche 8, die auf druckmittelbetätigbarem Wege z.B. durch einen Druckluftzylinder oder durch einen Elektromagneten durchführbar ist, wird ein von der Schleppkette 6 nach oben beförderter Lastträger 2 auf die Hilfsbahn 9 geleitet. In deren Verlauf ist zunächst eine Pufferstation 10 vorgesehen, die mehrere ankommende Lastträger 2 aufstaut und zum gegebenen Zeitpunkt den zuerst aufgestauten Lastträger 2 freigibt.

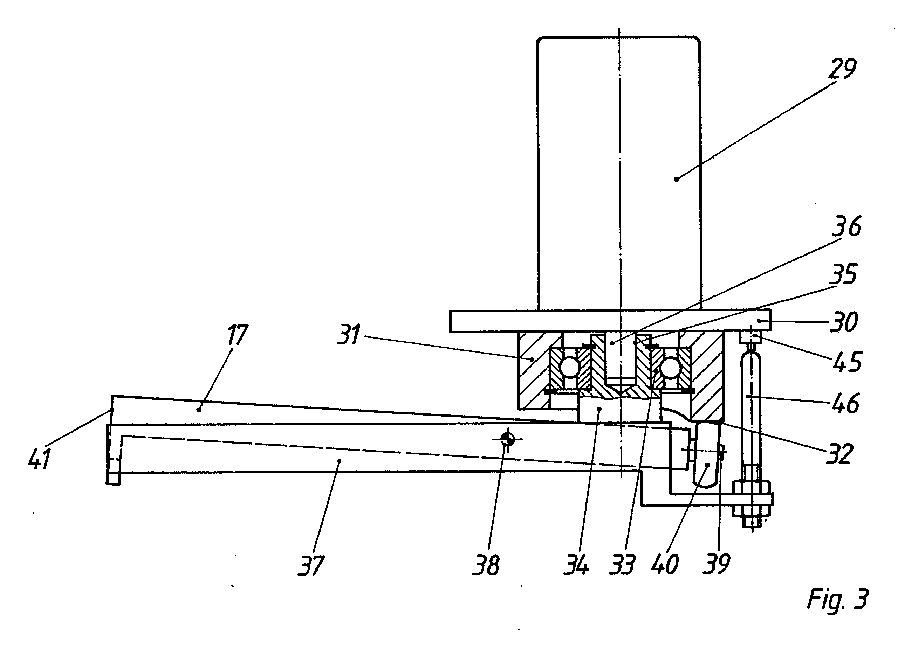

Im weiteren Verlauf der Hilfsbahn 9 ist ferner die Schwenkvorrichtung 15 und die zweite Halte- und Vereinzelungsvorrichtung 11'' vorgesehen. Eine horizontal gerichtete, an jedem Lastträger 2 befindliche Achse 16 des auf die Schwenkvorrichtung 15 zurollenden Lastträgers 2 wird von einem Maul 18 der Schwenkvorrichtung 15 aufgenommen. Sie besteht aus einem gesteuerten Elektromotor 29, an dessen Flanschseite eine Platte 30 befestigt ist. Auf deren Unterseite sind gemäß Fig. 3 mehrere Schalter 45 vorgesehen, durch die entsprechende Positionierungen eines Auslegers 37 durch den Elektromotor 29 erreichbar sind. Ein Ring 31 ist ebenfalls mit der Flanschseite des Elektromotors 29 fest verbunden.

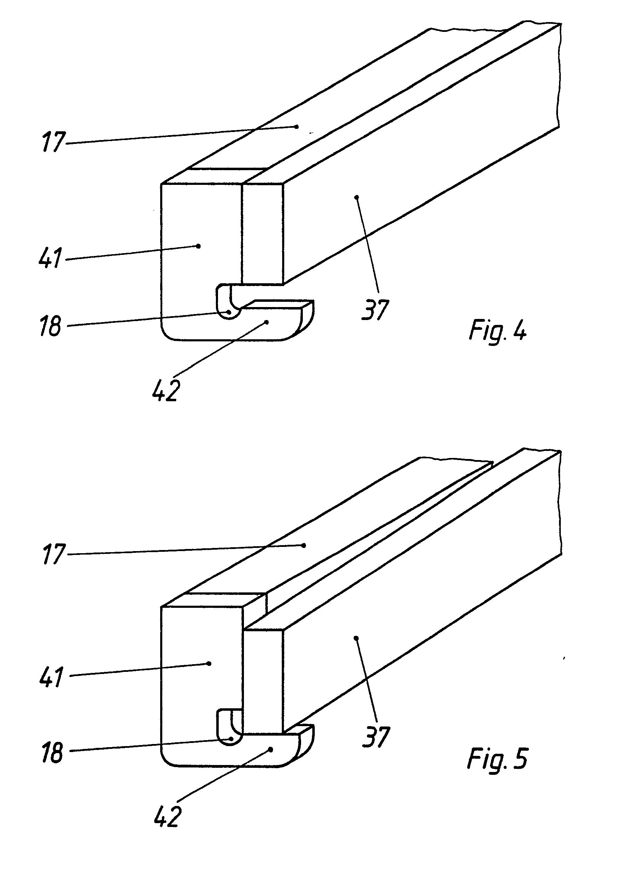

Die freie Stirnseite des Ringes 31 weist eine Kurvenfläche 32 auf. In seiner Innenbohrung nimmt der Ring 31 ein reibungsarmes Lager, z. B. ein Wälzlager 33 auf. In dessen Innenring ist eine Buchse 34 gelagert, die eine mit einer Nute versehene Mittenbohrung 35 aufweist. Sie nimmt einen Wellenstumpf 36 des Elektromotors 29 verdrehsicher auf. Fest mit der Buchse 34 ist der Ausleger 37 verbunden, der mit einem in der Höhe einstellbaren Schaltstift 46 bestückt ist. Durch seine Kuppe sind die Schalter 45 betätigbar. Am Ausleger 37 ist ein ein bekannter Weise als horizontal angeordneter Stift ausgeführtes Drehgelenk 38 vorgesehen, das einen als zweiarmigen Hebel ausgebildeten Schwenkarm 17 aufnimmt. Am Ende seines kürzeren Hebelarmes ist ein Zapfen 39 und eine darauf reibungsarm gelagerte Rolle 40 vorgesehen. Am anderen Ende des Schwenkarms 17 ist eine Lasche 41 vorgesehen, deren unterer Bereich als Maul 18 ausgebildet ist. Die Unterseite der Lasche 41 ist gemäß Fig. 4 und 5 als eine vorstehende Nase 42 ausgeführt.

Der am tiefsten gelegene Punkt der Hilfsbahn 9 mündet unterhalb des Endpunktes 5 in die Hauptbahn 4 ein.

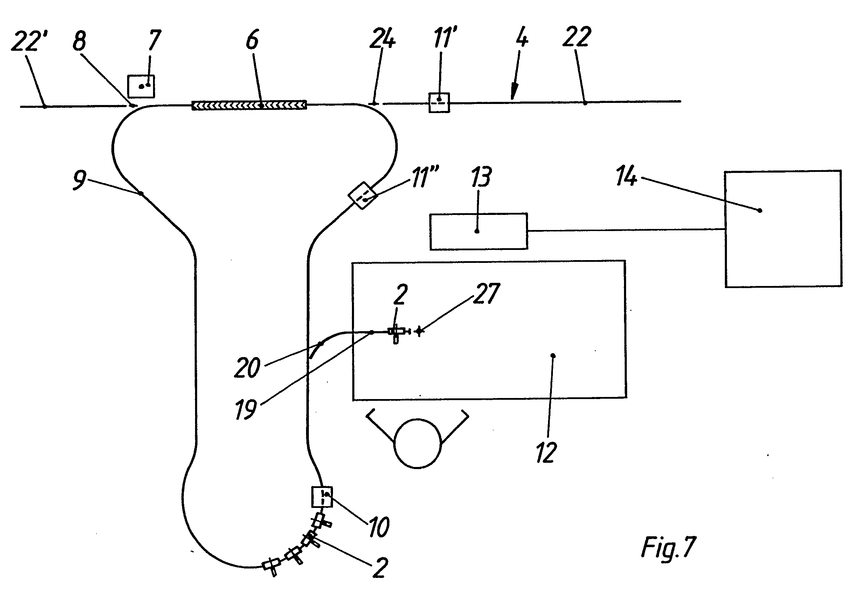

In einer weiteren Ausgestaltung der Erfindung nach Anspruch 6 gelangt der von der Pufferstation 10 zuerst aufgestaute und später freigegebene Lastträger 2 über eine kurzzeitig umgelegte Weiche 20 gemäß Fig. 7 in eine Stichbahn 19 und befindet sich – während die Weiche 20 sich nicht mehr in Wirkverbindung mit der Hilfsbahn 9 befindet – somit für die Dauer der Bearbeitung des Werkstücks 1 außerhalb der Hilfsbahn 9. Nach erfolgter Bearbeitung wird der Lastträger 2 – nachdem die Weiche 20 erneut kurzzeitig umgelegt wurde – wieder in die Hilfsbahn 9 eingeschleust.

Um die Verkürzung der Durchlaufzeiten zu gewährleisten, müssen für jede Arbeitsstation 12 eine Vielzahl bestimmter, wandelbarer Informationen vorliegen, die wegen der erforderlichen Aktualisierung ständig ergänzt, berichtigt, erweitert und ausgetauscht werden müssen. Deshalb ist jede Arbeitsstation 12 mit einem Arbeitsplatzrechner 13 ausgestattet, der neben einer LCD-Anzeige auch mehrere Funktionstasten für die Weiterleitung von Informationen/Daten bzw. für die Einleitung bestimmter, automatischer Abläufe enthält. Eine Vielzahl solcher Arbeitsplatzrechner 13 steht in Verbindung mit einem übergeordneten Verwaltungsrechner 14, in den die zur Fertigung eines bestimmten Erzeugnisses erforderlichen festen Daten wie produkt- und operationsbezogene Daten, jedoch auch kundenspezifische Daten als Programm eingegeben wurden. Nach einem derart aufgestellten Ablaufplan steuert der Verwaltungsrechner 14 den Materialfluß zu und zwischen den verschiedenen Arbeitsstationen 12. Ebenso wertet er die über das Netzwerk der Arbeitsplatzrechner 13 empfangenen Informationen/Daten aus, um sie dann praktisch verzögerungsfrei in ablaufbestimmende Steuerimpulse umzusetzen.

Nachfolgend wird die Arbeitsweise der Vorrichtung zur Verkürzung der Durchlaufzeiten beschrieben:
Nachdem die jedem Lastträger 2 zugeordnete Code-Nummer z. B. manuell über eine Tastatur oder durch die Lesevorrichtung 7 in den Verwaltungsrechner 14 eingegeben und ferner die auf jedes Werkstück 1 aufgebrachte Codierung z. B. durch eine handelsübliche Lesepistole gelesen oder manuell durch eine Tastatur eingegeben und ebenfalls dem Verwaltungsrechner 14 gemeldet wurde, wird der Bewegungsablauf des betreffenden Lastträgers 2 während seines fertigungstechnischen Durchlaufes ständig überwacht. Die dabei gewonnenen Daten werden nach vorgegebenen, als Rechenprogramm gespeicherten Kriterien verknüpft und ergeben somit die Grundlage für einen zielgerichteten Materialfluß unter der Voraussetzung kurzer Durchlaufzeiten.

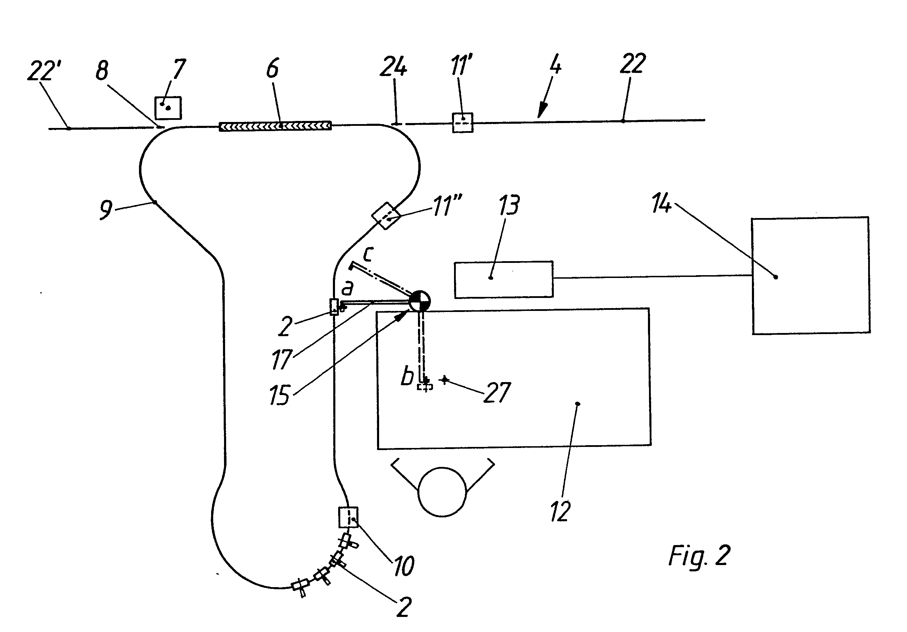

Nach Eingabe seiner Codierung wird der Lastträger 2 an der Aufgabestelle 3 auf die Tragschiene 22 gesetzt und rollt unter Schwerkraftwirkung bis zur ersten Halte- und Vereinzelungsvorrichtung 11'. Der von ihr freigegebene Lastträger 2 rollt nun über die Brücke 24 weiter bis zum Endpunkt 5 und wird anschließend von der Schleppkette 6 wieder auf das höhere Niveau gebracht. Dabei gelangt der Lastträger 2 in die Lesevorrichtung 7, die die vorzugsweise an einer Laufrolle 44 aufgebrachte Codierung liest und dem Verwaltungsrechner 14 im Zusammenhang mit dem momentanen Standort des Lastträgers 2 mitteilt. Wird aufgrund des eingegebenen Programms vom Verwaltungsrechner 14 entschieden, daß besagter Lastträger 2 der seinem momentanen Standort am nächsten liegenden Arbeitsstation 12 zugeleitet werden soll, so wird die Weiche 8 umgelegt, wodurch der Lastträger 2 auf die in Fig. 1 gezeigte Hilfsbahn 9 geleitet wird. Anschließend rollt er durch Schwerkraftwirkung bis zur Pufferstation 10 vor. Gibt diese den aufgestauten Lastträger 2 frei, so rollt er auf der Hilfsbahn 9 so weit, bis die am Lastträger 2 befindliche Achse 16 vom Maul 18 der Schwenkvorrichtung 15 aufgefangen wird. Jetzt wird der Ausleger 37 um einen definierten Winkel verschwenkt. Zu Beginn dieser Verschwenkung steigt die Rolle 40 auf den vorstehenden Teil der Kurvenfläche 32. Dadurch wird der Schwenkarm 17 im Uhrzeigersinn verschwenkt. Auf diese Weise wird gleich zu Beginn der Verschwenkung des Auslegers 37 der betreffende Lastträger 2 von der Hilfsbahn 9 abgehoben. Da nach der Verschwenkung des Schwenkarmes 17 das Maul 18 gemäß Fig. 5 geschlossen ist, kann der Lastträger 2 – solange er sich außerhalb der Hilfsbahn 9 befindet – vom Schwenkarm 17 nicht abgenommen werden. Nach Durchlauf des Schwenkwinkels – in der Regel 90° – befindet sich der Lastträger 2 und die mit ihm verbundenen Werkstücke 1 in direkter Nachbarschaft des Bearbeitungszentrum 27 der Arbeitsstation 12 (vgl. Stellung «b» in Fig. 2). Solange sich der eben besprochene Lastträger außerhalb der Hilfsbahn 9 befindet, kann der Sortierbetrieb der auf der Hilfsbahn 9 befindlichen anderen Lastträger 2 weiter laufen um zu gewährleisten, daß wenigstens ein gleichartiges Werkstück 1 für die nächstfolgende Bearbeitung auf der erwähnten Arbeitsstation 12 bereitsteht.

Nach Beendigung der Bearbeitung wird der Ausleger 37 wieder zurückgeschwenkt, wodurch der an ihm befindliche Lastträger 2 wieder auf die Hilfsbahn 9 aufgesetzt wird. Anschließend wird der Ausleger 37 bis in die Stellung «c» gemäß Fig. 2 verschwenkt, um den ungehinderten Durchgang des gerade aufgesetzten Lastträgers 2 zu ermöglichen. Hat er die besagte Stellung «c» passiert, bewegt sich der Ausleger 37 wieder in seine Ausgangsstellung «a» zurück.

Der Lastträger 2 rollt weiter bis zur zweiten Halte- und Vereinzelungsvorrichtung 11''. Gibt diese den Lastträger 2 frei, rollt er bis zum Ende der Hilfsbahn 9, wobei die Brücke 24 durch seine Laufrolle 44 hochgedrückt wird. Somit wird der Lastträger 2 von der Schleppkette 6 nach oben befördert, während die Brücke 24 nach Freigabe durch die Laufrolle 44 wieder ihre untere, in Fig. 1 gezeigte Lage einnimmt. Der oben angekommene Lastträger 2 gelangt somit zum zweiten Mal in die Lesevorrichtung 7, wodurch abermals seine Codierung gelesen wird. Dadurch wird u. a. eine dem eben durchgeführten Arbeitsgang entsprechende Zeitgutschrift für die betreffende Bedienungsperson veranlaßt.

Gemäß dem im Verwaltungsrechner 14 gespeicherten Ablaufplan für das soeben bearbeitete Werkstück 1 wird dessen Lastträger 2 – falls an dem Werkstück 1 weitere Bearbeitungen vorzunehmen sind – auf die sich anschließende Tragschiene 22', über eine Schleppkette 6' und über eine Hilfsbahn 9' zu einer anderen Arbeitsstation 12' geleitet (die letztgenannten wurden in Fig. 1 nicht dargestellt).

Aus dem vorstehend Beschriebenen ist ersichtlich, daß eine große Zahl von unterschiedlichen Arbeitsstationen 12 ausgehend von der Hauptbahn 4 über davon abzweigende Hilfsbahnen 9 auf sehr rationelle Weise anfahrbar sind. Neben der Verkürzung der Durchlaufzeiten ist das Verfahren gemäß der Erfindung wegen des modularen Aufbaus der erforderlichen Vorrichtung sehr flexibel, weil besagte Vorrichtung den fertigungstechnischen wie auch räumlichen Voraussetzungen – auch im Falle nachträglicher Veränderungen – auf relativ einfache Weise anpaßbar und jederzeit erweiterungsfähig ist.

**Patentansprüche**

1. Verfahren zur Verkürzung der Durchlaufzeiten in Fertigungsbetrieben der Bekleidungsindustrie, des Maschinen- und Fahrzeugbaus, der Elektro- und optischen Industrie, bei dem zur Erreichung eines weitgehend automatischen Materialflusses aus mehreren auf einer Hauptbahn (4) verfahrbaren, mit einer Codierung versehenen und mit Werkstücken (1) beladenen Lastträgern (2) wenigstens ein identifizierter Lastträger (2) auf eine definierte, von der Hauptbahn (4) abzweigende Hilfsbahn (9) geleitet, in Nähe einer Arbeitsstation (12) zwecks Bearbeitung der Werkstücke (1) vorbeigeführt und danach wieder in die Hauptbahn (4) eingeschleust wird, dadurch gekennzeichnet, daß der mit codierten Werkstücken (1) beladene Lastträger (2) durch Schwerkraftwirkung von einer höher gelegenen Aufgabestelle (3) zu einer ersten Halte- und Vereinzelungsvorrichtung (11') und danach zu einem tiefer gelegenen Endpunkt (5) auf der Hauptbahn (4) befördert wird, daß anschließend der Lastträger (2) von einer Schleppkette (6) zu einer höher gelegenen Lesevorrichtung (7) gebracht wird, daß der von letzterer identifizierte Lastträger (2) über eine Weiche (8) auf die Hilfsbahn (9) geleitet und durch Schwerkraftwirkung zu einer Pufferstation (10) befördert wird, daß der von letzterer freigegebene Lastträger (2) zeitweilig von der Hilfsbahn (9) entfernt wird, so daß er von nachfolgenden, ebenfalls auf dieser Hilfsbahn befindlichen Lastträgern (2) überholt werden kann, daß nach durchgeführter Bearbeitung der Werkstücke (1) der Lastträger (2) wieder der Hilfsbahn (9) zugeführt, zur zweiten Halte- und Vereinzelungsvorrichtung (11'') befördert und anschließend mittels der Schleppkette (6) wieder in die Hauptbahn (4) eingeschleust wird und daß der Ablauf der Verfahrensschritte durch einen jeder Arbeitsstation (12) zugeordneten Arbeitsplatzrechner (13) und einen zentralen Verwaltungsrechner (14) gesteuert wird.

2. Verfahren nach Anspruch 1, dadurch gekennzeichnet, daß der von der Hilfsbahn (9) entfernte Lastträger (2) in eine bezogen auf ein Bearbeitungszentrum (27) der Arbeitsstation (12) griffoptimierte Lage verbracht wird.

3. Vorrichtung zur Durchführung des Verfahrens nach den Ansprüchen 1 und 2, die umfaßt: eine Hauptbahn (4) mit mehreren, geneigt ausgebildeten Hilfsbahnen (9), die über umlegbare Weichen (8) von der Hauptbahn (4) abzweigen, mehrere auf der Hauptbahn (4) und den Hilfsbahnen (9) verfahrbare, codierte Lastträger (2), wenigstens ein im Förderkreislauf vorgesehenes Erkennungsgerät, welches die vorbeifahrenden Lastträger (2) identifiziert und eine Schleppkette (6), welche den Lastträger (2) wieder auf das höhere Niveau der Hauptbahn (4) bringt, dadurch gekennzeichnet, daß die Hauptbahn (4) im wesentlichen mehrere als Gefällstrecke ausgeführte Tragschienen (22, 22') mit einer am tiefsten Punkt jeder Tragschiene (22, 22') vorgesehenen, schwenkbaren Brücke (24) und aus der die Wirkverbindung zwischen den Tragschienen (22, 22') herstellenden Schleppkette (6) besteht, daß kurz vor der Brücke (24) eine erste Halte- und Vereinzelungsvorrichtung (11') vorgesehen ist, daß in Nähe der höchsten Stelle der Schleppkette (6) eine Lesevorrichtung (7) und die durch Fremdkraft betätigbare Weiche (8) vorgesehen ist, daß über letztere die als Gefällstrecke ausgeführte Hilfsbahn (9) von der Hauptbahn (4) abzweigt, daß im Verlauf der Hilfsbahn (9) die Pufferstation (10), eine auf einen definierten Lastträger (2) einwirkende Separiervorrichtung (15, 19), die dessen Überholen durch ihm nachfolgende, auf der Hilfsbahn (9) befindliche Lastträger (2) ermöglicht und eine zweite Halte- und Vereinzelungsvorrichtung (11'') vorgesehen sind und daß zur Überwachung der umlaufenden Lastträger (2) ein jeder Arbeitsstation (12) zugeordneter Arbeitsplatzrechner (13) mit einem zentralen Verwaltungsrechner (14) zusammenwirkt.

4. Vorrichtung nach Anspruch 3, dadurch gekennzeichnet, daß die Separiervorrichtung eine Schwenkvorrichtung (15) ist, die im wesentlichen aus einem gesteuerten, ortsfesten Elektromotor (29) und einem zeitweilig von diesem in der Horizontalebene verschwenkbaren Ausleger (37) mit einem über ein Drehgelenk (38) am Ausleger (37) schwenkbar gelagerten Schwenkarm (17) besteht.

5. Vorrichtung nach den Ansprüchen 3 und 4, dadurch gekennzeichnet, daß an der Flanschseite des Elektromotors (29) eine Platte (30) und ein Ring (31) mit stirnseitiger Kurvenfläche (32) befestigt sind, daß der Ausleger (37) über eine Buchse (34) fest mit dem Wellenstumpf (36) des Elektromotors (29) verbunden ist, daß der als zweiarmiger Hebel ausgeführte Schwenkarm (17) an seinem kürzeren Hebelarm einen Zapfen (39) und eine darauf drehbar gelagerte Rolle (40) aufweist, welche sich auf der Kurvenfläche (32) abwälzt und daß am anderen Ende des Schwenkarms (17) eine Lasche (41) befestigt ist, deren unterer Bereich als ein Maul (18) ausgebildet ist.

6. Vorrichtung nach Anspruch 3, dadurch gekennzeichnet, daß die Separiervorrichtung eine winklig von der Hilfsbahn (9) abzweigende Stichbahn (19) ist, wobei der Lastträger (2) durch eine in der Horizontalebene durch ein Druckmittel oder einen Elektromagneten umlegbare Weiche (20) von der Hilfsbahn (9) ausschleusbar bzw. einschleusbar ist.

**Claims**

1. A method of shortening the passage times in production plants in the clothing industry, machine and vehicle construction, and the electrical and optical industry, in which, in order to obtain a substantially automatic flow of material, at least one identified load carrier (2) out of a number of load carriers (2) movable on a main path (4) and coded and loaded with workpieces (1) is guided along a defined auxiliary path (9) branching off the main path (4), is conveyed alongside a work station (12) for the purpose of processing the workpieces (1), and is then returned to the main path (4), characterised in that the load carrier (2) loaded with coded workpieces (1) is conveyed by gravity from a relatively high loading point (3) to a first holding and separating device (11') and thence to a lower end point (5) on the main path (4), the load carrier (2) is then conveyed by a drag chain (6) to a higher reading device (7), the load carrier (2) identified by the reading device is guided via a switch (8) on to the auxiliary path (9) and conveyed by gravity to a buffer station (10), the load carrier (2) released from the buffer station is periodically removed from the auxiliary path (9) so that it can be overtaken by subsequent load carriers (2) likewise on the auxiliary path, after the workpieces (1) have been processed the load carrier (2) is returned to the auxiliary path (9), conveyed to the second holding and separating device (11'') and then returned by the drag chain (6) to the main track (4), and the sequence of process steps is controlled by a workplace computer (13) and a central management computer (14) associated with each work station (12).

2. A method according to claim 1, characterised in that the load carrier (2) removed from the auxiliary path (9) is brought to a position for improved handling with respect to a work centre (27) on the work station (12).

3. Means for working the method according to claims 1 and 2 comprising: a main path (4) and a number of inclined auxiliary paths (9) which branch from the main path (4) via reversible switches (8), a number of coded load carriers (2) movable on the main path (4) and the auxiliary paths (9), at least one recognition device provided in the conveying circuit and identifying the load carriers (2) moving past, and a drag chain (6) which returns the load carrier (2) to the higher level of the main track (4), characterised in that the main track (4) substantially comprises a number of downward-sloping carrier rails (22, 22') with a pivotable bridge (24) disposed at the lowest point on each carrier rail (22, 22') and also comprises the drag chain (6) which makes the operative connection between the carrier rails (22, 22'), a first holding and separating device (11') is provided a short distance in front of the bridge (24), a reading device (7) and the switch (8) actuated by external force are provided near the highest point of the drag chain (6), the downwardsloping auxiliary track (9) branches via the switch (8) from the main track (4), the buffer station (10), a separating device (15, 19) acting on a given load carrier (2) enabling is to be overtaken by subsequent load carriers (2) on the auxiliary path (9), and a second holding and separating device (11'') are provided on the auxiliary path (9), and a workplace computer (13) associated with each work station (12) cooperates with a central management computer (14) for monitoring the circulating load carriers (2).

4. Means according to claim 3, characterised in that the separating device is a swing-out device (15) substantially comprising a controlled stationary electric motor (29) and an extension arm (37) periodically pivotable by the electric motor into the horizontal plane, and a swing arm (17) pivotably mounted on the extension arm (37) via a swivel joint (38).

5. Means according to claims 3 and 4, characterised in that a plate (30) and a ring (31) having a cam surface (32) at its end are secured to the flanged side of the electric motor (29), the extension arm (27) is permanently connected by a bush (34) to the stub shaft (36) of the electric motor (29), the swing arm (17), which is constructed as a two-armed lever, has a pin (39), on its shorter lever arm and a roller (40) rotatably mounted thereon and rolling on the cam surface (32), and a hook (41) is secured to the other end of the swing arm (17) and its lower region is in the form of a jaw (18).

6. Means according to claim 3, characterised in that the separating device is an angular spur path (19) branching off from the auxiliary path (9), the load carrier (2) being movable out of or into the auxiliary path (9) by a switch (20) reversible in the horizontal plane by a pressure medium or an electromagnet.

**Revendications**

1. Procédé destiné à raccourcir les temps de parcours dans des installations de fabrication de l'industrie du vêtement, de la construction de machines et d'automobiles, de l'industrie électrique et optique, selon lequel, pour atteindre un flux largement automatique à partir de plusieurs porte-charge portant un codage et chargés de pièces (1), mobiles sur un convoyeur principal (4), au moins un porte-charge (2) identifié et dirigé sur un convoyeur auxiliaire (9) qui s'embranche sur le convoyeur principal (4), est amené au voisinage d'une station de travail (2) en vue d'un traitement des pièces et est ensuite renvoyé à nouveau dans le convoyeur principal (4), caractérisé en ce que, le porte-charge (2) chargé des pièces codées (1) est amené par gravité depuis un emplacement de chargement situé plus haut (3) vers un premier dispositif d'arrêt et d'individualisation (11') et ensuite vers un point final situé plus bas (5) sur le convoyeur principal (4), qu'ensuite le porte-charge est amené par une chaîne d'entraînement (6) à un dispositif de lecture (7) disposé plus haut, en ce que le porte-charge (2) identifié par ce dernier est conduit par un aiguillage sur le convoyeur auxiliaire (9) et qu'il est amené par gravité vers une station tampon (10), en ce que le porte-charge libéré par cette dernière est enlevé temporairement du convoyeur auxiliaire, de sorte qu'il peut être dépassé par d'autres porte-charge (2) qui se trouvent également sur le convoyeur auxiliaire, en ce que le porte-charge (2), après exécution du traitement des pièces (1), est à nouveau amené au convoyeur auxiliaire (9), envoyé au deuxième dispositif (11'') d'arrêt et d'individualisation, qu'il est ensuite à nouveau ramené dans le convoyeur principal (4) au moyen de la chaîne d'entraînement (6), et en ce que la séquence des étapes du procédé est commandée par un calculateur d'emplacement de travail (13) disposé à chaque station de travail (12) et par un ordinateur central de gestion (14).

2. Procédé selon la revendication 1, caractérisé en ce que le porte-charge (2) écarté du convoyeur principal (9) est amené dans une position de saisie optimale par rapport au centre de traitement (27) de la station de travail (12).

3. Dispositif d'exécution du procédé selon les revendications 1 et 2, comprenant: un convoyeur principal (4) comportant plusieurs convoyeurs auxiliaires (9) de structure inclinée, qui s'embranchent sur le convoyeur principal (4) par plusieurs aiguillages commutables (8), plusieurs porte-charge (2) codés, mobiles sur le convoyeur principal et les convoyeurs auxiliaires (9), au moins un dispositif de reconnaissance disposé dans le circuit d'envoi, qui identifie les porte-charge (2) passant à proximité, et une chaîne d'entraînement (6), qui amène à nouveau les porte-charge (2) sur le niveau plus élevé des convoyeurs principaux (4), caractérisé en ce que, le convoyeur principal (4) se compose de plusieurs rails de support (22, 22') réalisés sous forme de pentes automotrices, comportant un pont basculant (24) au point le plus bas de chaque rail de support (22, 22'), et de la chaîne d'entraînement (6) qui constitue la liaison active entre les rails porteurs (22, 22'), en ce qu'un premier dispositif (11') d'arrêt et d'individualisation est disposé peu avant le pont (24), en ce qu'un dispositif de lecture (7) et l'aiguillage (8) actionnable de l'extérieur sont disposés au voisinage de l'emplacement le plus élevé de la chaîne d'entraînement (6), en ce que le convoyeur auxiliaire (9), réalisé sous forme de pente automotrice, bifurque grâce à ce dernier du convoyeur principal (4), en ce que sont disposés, sur le trajet du convoyeur auxiliaire (9), la station tampon (10), un dispositif séparateur (15, 19) agissant sur des porte-charge définis (2), qui permet à ces derniers d'être dépassés par des porte-charge (2) qui les suivent et se trouvent sur le convoyeur auxiliaire (9), ainsi qu'un deuxième dispositif (11'') d'arrêt et d'individualisation, et en ce qu'un ordinateur (13) d'emplacement de travail disposé à chaque station de travail (12) coopère avec un ordinateur central de gestion (14) pour la surveillance des porte-charge (2) en circulation.

4. Dispositif selon la revendication 3, caractérisé en ce que, le dispositif de séparation est un dispositif à basculement (15) qui se compose essentiellement d'un moteur électrique (29) fixe, commandé, et d'une console (37) qui peut être basculée temporairement par celui-ci dans le plan horizontal et porte un bras de basculement (17) monté à pivot sur la console (37) par une articulation (38).

5. Dispositif selon l'une des revendications 3 et 4, caractérisé en ce qu'une plaque (30) et un anneau (31) à surface incurvée (32) du côté frontal sont fixés sur le côté de bride du moteur électrique (29), en ce que la console (37) est reliée fermement à l'embout d'arbre (36) du moteur électrique (29) par une douille (34), en ce que le bras basculant (17), réalisé sous forme de levier à deux bras, présente sur son bras de levier le plus court un tenon (39) et un galet (40) monté à rotation sur celui-ci, rouleau qui roule vers le bas sur la surface incurvée (32) et en ce qu'à l'autre extrémité du bras basculant (17) est fixée une attache (41), dont la zone inférieure est conformée comme une mâchoire (18).

6. Dispositif selon la revendication 3, caractérisé en ce que le dispositif de séparation est un embranchement (19) qui fait un certain angle avec le convoyeur auxiliaire (9), le porte-charge (2) pouvant être enlevé du convoyeur auxiliaire (9) ou y être ramené au moyen d'un aiguillage (20) qui peut être commuté par un milieu de pression ouparun électro-aimant.

Fig.1

Fig. 2

Fig. 3

EP 0 214 446 B1

17

41

18

42

37

*Fig. 4*

17

41

18

42

37

*Fig. 5*

Fig. 6

Fig.7

EP 0 214 446 B1